# EUROPÄISCHE PATENTSCHRIFT

(11) **EP 0 602 550 B1**
(45) Veröffentlichungstag und Bekanntmachung des Hinweises auf die Patenterteilung: **19.08.1998**
(21) Anmeldenummer: 93119886.5
(22) Anmeldetag: 09.12.1993
(51) Int. Cl.: C09B 62/445, C09B 62/06, C07C 311/46, D06P 3/66, D06P 1/382, D06P 1/384

(54) **Wasserlösliche Anthrachinonverbindungen, Verfahren zu ihrer Herstellung und ihre Verwendung als Farbstoffe**
Watersoluble anthraquinone compounds, process for their preparation and their use as dyestuffes
Composés d'anthraquinone solubles dans l'eau, leur procédé de préparation et leur utilisation comme colorants

(30) Priorität: 18.12.1992 DE 4242970; 23.06.1993 DE 4320733
(43) Veröffentlichungstag der Anmeldung: 22.06.1994
(73) Patentinhaber: DyStar Textilfarben GmbH & Co. Deutschland KG, 60318 Frankfurt am Main (DE)
(72) Erfinder: Dannheim, Jörg, Dr., D-60489 Frankfurt/Main (DE); Russ, Werner Hubert, Dr., D-65439 Flörsheim/Main (DE); Springer, Hartmut, Dr., D-61462 Königstein (DE)

(56) Entgegenhaltungen:
- EP-A- 0 024 676
- EP-A- 0 043 561
- GB-A- 2 246 352
- US-A- 4 210 593
- DATABASE WPI Week 8303, Derwent Publications Ltd., London, GB; AN 83-06389K[03] & JP-A-57 199 878 (SUMITOMO CHEMICAL KK) 7. Dezember 1982 & JP-A-57 199 878 (...)
- CHEMICAL ABSTRACTS, vol. 55, no. 16, 7. August 1961, Columbus, Ohio, US; abstract no. 16563i, E. ANGELETTI 'Synthesis of 1,1-dioxo-1,2,4-benzothiadiazines' Spalte 1 ; & GAZZ. CHIM. ITAL. Bd. 90 , 1960 , TURIN, ITALY Seiten 841 - 847 DITO 'dito'
- JOURNAL OF THE AMERICAN CHEMICAL SOCIETY Bd. 82, Nr. 5 , 16. März 1960 , USA Seiten 1609 - 1613 H. KOVACZ NAGY, A. J. TOMSON, J. P. HORWITZ '5-Sulfanilamidotetrazole'

## Beschreibung

Die Erfindung liegt auf dem technischen Gebiet der faserreaktiven Farbstoffe.

Aus der japanischen Patentanmeldungs-Veröffentlichung Sho-57-199 878 sind unter anderem anthrachinoide Farbstoffe bekannt, die Cyanamido-, N-Cyanobenzamido- und N-Cyanosulfonamido-Gruppen enthalten. Sie besitzen jedoch teilweise anwendungstechnische Mängel, wie niedrige Fixiergrade, niedrige Farbstärke und fehlende Brillanz.

Mit der vorliegenden Erfindung wurden nunmehr Anthrachinonverbindungen gefunden, die sich als faserreaktive Farbstoffe vorteilhaft gegenüber den bekannten Farbstoffen unterscheiden und Färbungen mit hoher Farbstärke in brillanten blauen Tönen liefern. Die neuen Anthrachinonverbindungen entsprechen der allgemeinen Formel (1) 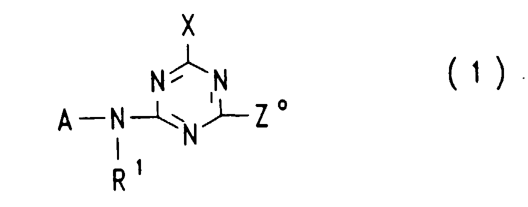 in welcher bedeuten:
- A: ist ein Rest der allgemeinen Formel (2) 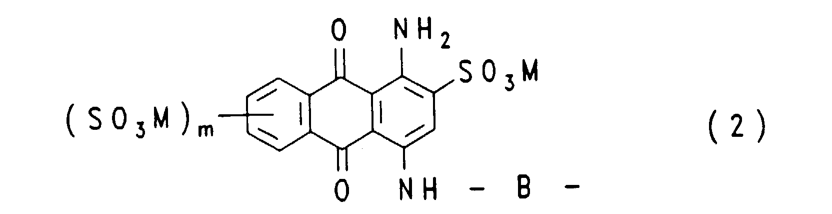 in welcher
M Wasserstoff oder ein Alkalimetall, wie Natrium, Kalium und Lithium, oder das Moläquivalent eines Erdalkalimetalls, wie des Calciums, und bevorzugt Wasserstoff und insbesondere ein Alkalimetall ist,
m die Zahl Null oder 1 bedeutet (wobei im Falle von m gleich Null diese Gruppe für Wasserstoff steht) und
B Phenylen ist, das durch 1 bis 4 Substituenten substituiert sein kann, die aus der folgenden Menge von Substituenten ausgewählt sind: 2 Sulfo, 1 Carboxy, 4 Alkyl von 1 bis 4 C-Atomen, wie Ethyl und insbesondere Methyl, und 2 Alkoxy von 1 bis 4 C-Atomen, wie Ethoxy und insbesondere Methoxy, oder Naphthylen bedeutet, das durch 1, 2 oder 3 Sulfogruppen substituiert sein kann, oder ein Rest der allgemeinen Formel -phen-D-phen- ist, in welcher phen jedes, zueinander gleich oder voneinander verschieden, einen Phenylenrest, bevorzugt den para-Phenylenrest, bedeutet, der unsubstituiert oder durch 1 oder 2 Substituenten aus der Gruppe Sulfo, Alkyl von 1 bis 4 C-Atomen, wie Ethyl und insbesondere Methyl, und Alkoxy von 1 bis 4 C-Atomen, wie Ethoxy und insbesondere Methoxy, substituiert ist, und D eine direkte Bindung oder eine Gruppe der Formel -NH- , -O-, -SO₂-, -CO-NH-, -NH-CO-, -SO₂-NH-, -NH-SO₂- oder -SO₂-NH-SO₂- ist;
R¹ ist Wasserstoff oder Alkyl von 1 bis 4 C-Atomen, wie Methyl und Ethyl, bevorzugt Wasserstoff;
X ist ein unter Einwirkung eines alkalisch wirkenden Mittels abspaltbarer Rest, wie beispielsweise Fluor, Chlor, Brom, Methylsulfonyl, bevorzugt Chlor und Fluor;
Z^{o} ist ein Rest der allgemeinen Formel (3) 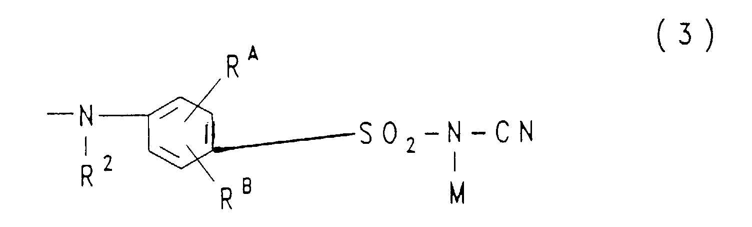
in welcher
- M: die obengenannte Bedeutung hat,
- R²: Wasserstoff oder Alkyl von 1 bis 4 C-Atomen, wie Methyl und Ethyl, ist, bevorzugt Wasserstoff ist,
- R^{A}: Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, ist,
- R^{B}: Wasserstoff, Brom, Chlor oder Alkoxy von 1 bis 4 C-Atomen, wie Ethoxy und insbesondere Methoxy, ist.
- n: die Zahl 1 oder 2 ist ;

Reste der allgemeinen Formel (2) sind beispielsweise 1-Amino-2-sulfo-anthrachinon-4-amino-(3'-sulfo-2',4',6'-trimethyl)-phen-5'-yl, 1-Amino-2-sulfo-anthrachinon-4-amino-(3'-sulfo)-phen-4'-yl, 1-Amino-2,7-disulfo-anthrachinon-4-amino-(3'-sulfo)-phen-4'-yl, 1-Amino-2,6-disulfo-anthrachinon-4-amino-(3'-sulfo)-phen-4'-yl, 1-Amino-2,7-disulfo-anthrachinon-4-amino-(4'-sulfo)-phen-3'-yl, 1-Amino-2,6-disulfo-anthrachinon-4-amino-(4'-sulfo)-phen-3'-yl, 1-Amino-2-sulfo-anthrachinon-4-amino-(4'-sulfo)-phen-3'-yl, 1-Amino-2-sulfo-anthrachinon-4-amino-(2',4'-disulfo)-phen-5'-yl, 1-Amino-2-sulfo-anthrachinon-4-amino-(3',2"-disulfo)-diphen(4',1")-4"-yl, 1-Amino-2-sulfo-anthrachinon-4-amino-(3"-sulfo)-diphen(4',1")-4"-yl, 1-Amino-2-sulfo-anthrachinon-4-amino-(2'-sulfo)-phenyl-4'-methyl, 1-Amino-2,6-disulfo-anthrachinon-4-amino-(2'-sulfo)-phen-4'-yl, 1-Amino-2,7-disulfo-anthrachinon-4-amino-(2'-sulfo)-phen-4'-yl, 1-Amino-2,5-disulfo-anthrachinon-4-amino-(2'-sulfo)-phen-4'-yl, 1-Amino-2,8-disulfo-anthrachinon-4-amino-(2'-sulfo)-phen-4'-yl, 1-Amino-2,6-disulfo-anthrachinon-4-amino-(2'-sulfo)-phen-3'-yl, 1-Amino-2,7-disulfo-anthrachinon-4-amino-(2'-sulfo)-phen-3'-yl, 1-Amino-2-sulfo-anthrachinon-4-amino-(2'-sulfo)-phenyl-5'-methyl, 1-Amino-2-sulfo-anthrachinon-4-amino-(2'-sulfo-4'-methoxy)-phenyl-5'-methyl, 1-Amino-2-sulfo-anthrachinon-4-amino-(2'-sulfo-6'-methoxy)-phenyl-3'-methyl, 1-Amino-2-sulfo-anthrachinon-4-amino-(3'-sulfo-2',6'-dimethyl)-phenyl-5'-methyl, 1-Amino-2-sulfo-anthrachinon-4-amino-(2'-sulfo-4'-methyl)-phenyl-6'-methyl, 1-Amino-2,6-disulfo-anthrachinon-4-amino-(2'-sulfo-4'-methyl)-phenyl-6'-methyl, 1-Amino-2-sulfo-anthrachinon-4-amino-(2'-sulfo-6'-methyl)-phen-4'-yl, 1-Amino-2-sulfo-anthrachinon-4-amino-(4'-sulfo-6'-methyl)-phen-3'-yl, 1-Amino-2-sulfo-anthrachinon-4-amino-(3'-sulfo-2',4',6'-trimethyl)-phenyl-5'-methyl, 1-Amino-2,6-disulfo-anthrachinon-4-amino-(3'-sulfo-6'-methyl)-phen-5'-yl, 1-Amino-2-sulfo-anthrachinon-4-amino-(3'-sulfo-6'-methyl)-phen-5'-yl, 1-Amino-2,5-disulfo-anthrachinon-4-amino-(6'-methyl)-phen-5'-yl, 1-Amino-2,6-disulfo-anthrachinon-4-amino-(6'-methyl)-phen-5'-yl, 1-Amino-2,5,8-trisulfo-anthrachinon-4-amino-phen-4'-yl, 1-Amino-2,6-disulfo-anthrachinon-4-amino-phen-4'-yl, 1-Amino-2,7-disulfo-anthrachinon-4-amino-phen-4'-yl, 1-Amino-2,5-disulfo-anthrachinon-4-amino-phen-4'-yl, 1-Amino-2,6-disulfo-anthrachinon-4-amino-phen-3'-yl, 1-Amino-2,5-disulfo-anthrachinon-4-amino-phen-3'-yl, 1-Amino-2,6-disulfo-anthrachinon-4-amino-(3'-sulfo-2',6'-dimethyl)-phenyl-5'-methyl, 1-Amino-2,7-disulfo-anthrachinon-4-amino-(3'-sulfo-2',6'-dimethyl)-phenyl-5'-methyl, 1-Amino-2,5-disulfo-anthrachinon-4-amino-(2'-sulfo-4'-methyl)-phenyl-3'-methyl, 1-Amino-2,8-disulfo-anthrachinon-4-amino-(4'-methyl)-phenyl-3'-methyl, 1-Amino-2,5,8-trisulfo-anthrachinon-4-amino-(2',6'-dimethyl)-phenyl-3'-methyl, 1-Amino-2,8-disulfo-anthrachinon-4-amino-(2'-sulfo)-phenyl-3'-methyl, 1-Amino-2,7-disulfo-anthrachinon-4-amino-(2'-sulfo-4'-methoxy)-phenyl-3'-methyl, 1-Amino-2,5-disulfo-anthrachinon-4-amino-(3'-sulfo)-phen-4'-yl, 1-Amino-2,5-disulfo-anthrachinon-4-amino-(3'-sulto-6'-methyl)-phen-5'-yl, 1-Amino-2-sulfo-anthrachinon-4-amino-phen-3'-yl-1"-sulfonylamidosulfonyl-4"-sulfo-phen-3"-yl, 1-Amino-2,6-disulfo-anthrachinon-4-amino-phen-4'-yl-1"-sulfonylamidosulfonyl-phen-4"-yl und 1-Amino-2-sulfo-anthrachinon-4-amino-phen-3'-yl-1"-sulfonylamidosulfonyl-phen-3"-yl, vorzugsweise 1-Amino-2-sulfo-anthrachinon-4-amino-(2',4',6'-trimethyl-5'-sulfo)-phen-3-yl und 1-Amino-2-sulfo-anthrachinon-4-amino-(4'-sulfo)-phen-3'-yl.

Von den erfindungsgemäßen Anthrachinonverbindungen der allgemeinen Formel (1) können insbesondere diejenigen hervorgehoben werden, die der allgemeinen Formel (1a) 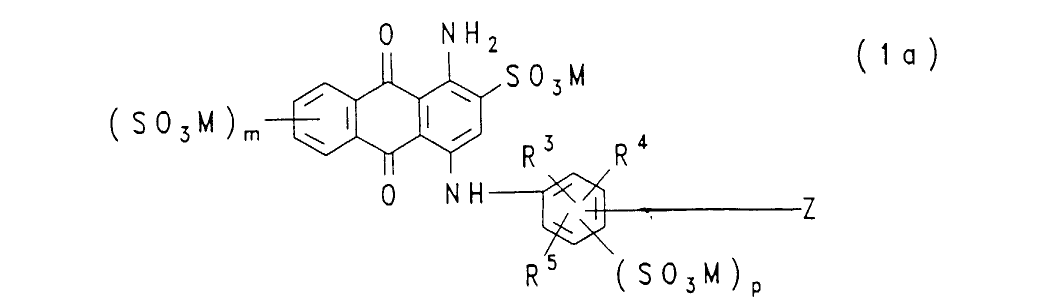 entsprechen. In diesen Formeln bedeuten:
- M und m: haben eine der obengenannten, insbesondere bevorzugten Bedeutungen;
- R³: ist Wasserstoff oder Alkyl von 1 bis 4 C-Atomen, wie Ethyl und insbesondere Methyl;
- R⁴: ist Wasserstoff oder Alkyl von 1 bis 4 C-Atomen, wie Ethyl und insbesondere Methyl;
- R⁵: ist Wasserstoff oder Alkyl von 1 bis 4 C-Atomen, wie Ethyl und insbesondere Methyl;
- p: ist die Zahl Null, 1 oder 2, bevorzugt 1 (wobei im Falle von p gleich Null diese Gruppe Wasserstoff bedeutet); und
- Z: ist ein Rest der allgemeinen Formel (4) 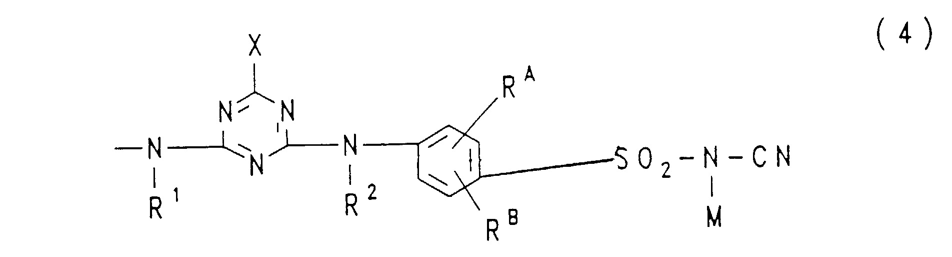 in welcher R¹, R², R^{A}, R^{B}, M, und X die obengenannten, insbesondere bevorzugten, Bedeutungen haben und X insbesondere bevorzugt für Chlor oder Fluor und hiervon insbesondere bevorzugt für Chlor steht.

In der allgemeinen Formel (1a) sind die Formelreste R³, R⁴ und R⁵ jeweils bevorzugt Methylgruppen.

Insbesondere bevorzugt von diesen hervorgehobenen Anthrachinonverbindungen sind solche Anthrachinonverbindungen, die der allgemeinen Formel (5) 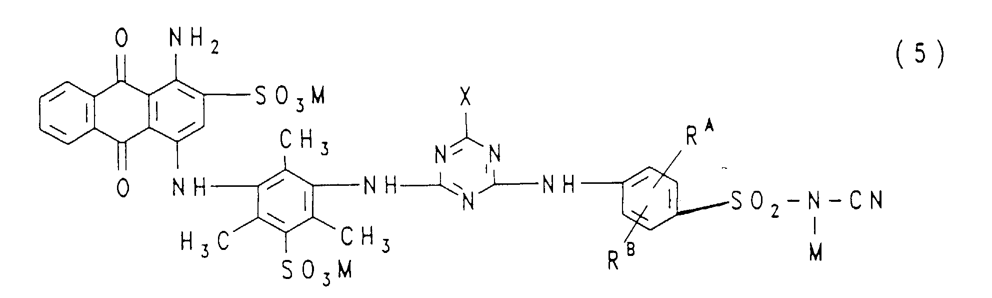 entsprechen, in welcher M, R^{A}, R^{B} eine der obengenannten, insbesondere bevorzugten, Bedeutungen haben, X für Chlor oder Fluor und bevorzugt Chlor steht.

Die vorliegende Erfindung betrifft ein weiterhin ein Verfahren zur Herstellung der erfindungsgemäßen Anthrachinonverbindungen der allgemeinen Formel (1), bei welchem man eine Halogen-s-triazin-Verbindung entsprechend der allgemeinen Formel (6) 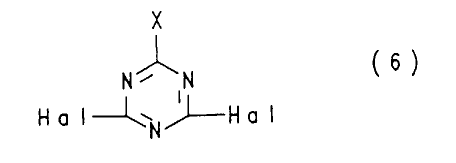 in welcher X eine der obengenannten, insbesondere bevorzugten, Bedeutungen besitzt und Hal für Halogen, wie Chlor oder Fluor, steht, wie beispielsweise 2,4,6-Trifluor-1,3,5-triazin (Cyanurfluorid) oder 2,4,6-Trichlor-1,3,5-triazin (Cyanurchlorid), mit einer aminogruppenhaltigen Anthrachinonverbindung entsprechend der allgemeinen Formel A-NHR¹ mit A und R¹ einer der obengenannten, insbesondere bevorzugten, Bedeutungen und mit einer Aminoverbindung der allgemeinen Formel (7) 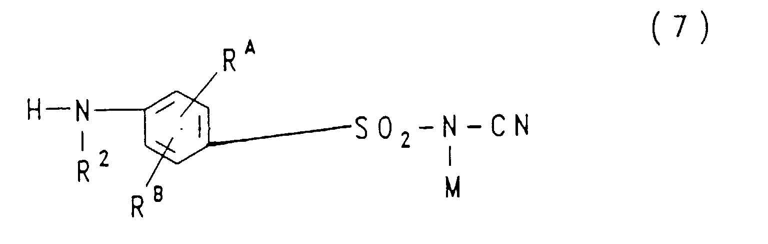 in welcher R², R^{A}, R^{B}, M eine der obengenannten Bedeutungen haben, in beliebiger Reihenfolge miteinander umsetzt.

Erfindungsgemäße Verfahrensvarianten dieser erfindungsgemäßen Verfahrensweise sind beispielsweise dadurch gekennzeichnet, daß man eine Verbindung der allgemeinen Formel (8) 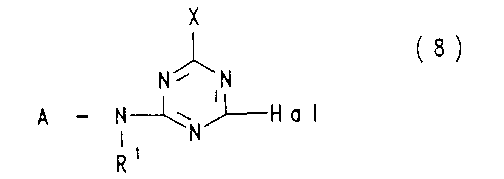 in welcher A, R¹, X und Hal die obengenannten Bedeutungen haben, mit einer Aminoverbindung der allgemeinen Formel (7) umsetzt, oder daß man eine Verbindung der allgemeinen Formel (9) 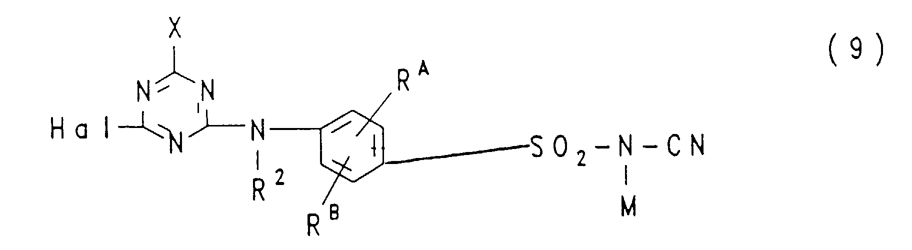 in welcher Hal, X, R², R^{A}, R^{B}, M die obengenannten Bedeutungen haben, mit einer Verbindung der allgemeinen Formel A-NHR¹ mit A und R¹ der obengenannten Bedeutung umsetzt. Hiervon ist die Verfahrensweise der Umsetzung einer Verbindung der allgemeinen Formel (8) mit einer Verbindung der allgemeinen Formel (7) bevorzugt.

Die Umsetzungen der Ausgangsverbindungen erfolgen im wäßrigen oder wäßrig-organischen Medium in Suspension oder Lösung. Führt man die Umsetzungen in einem wäßrig-organischen Medium durch, so ist das organische Medium beispielsweise Aceton, Dimethylformamid, Dimethylsulfoxid oder N-Methylpyrrolidon. Vorteilhaft wird der bei der Kondensation freiwerdende Halogenwasserstoff laufend durch Zugabe wäßriger Alkalihydroxide, -carbonate oder -bicarbonate neutralisiert. Die erste Kondensationsreaktion des Halogen-s-triazins der allgemeinen Formel (6) erfolgt in der Regel bei einer Temperatur zwischen -5°C und +20°C, im Falle von Hal gleich Fluor bevorzugt bei einer Temperatur zwischen -5°C und +5°C, und bei einem pH-Wert zwischen 2 und 10, bevorzugt zwischen 4 und 6. Die nachfolgende Kondensationsreaktion mit der zweiten Aminoverbindung erfolgt in der Regel bei einer Temperatur zwischen 5 und 60°C, im Falle von Hal gleich Fluor bevorzugt bei einer Temperatur zwischen 0 und 20°C, und bei einem pH-Wert zwischen 3 und 9, bevorzugt zwischen 6 und 7.

Insbesondere erfolgt die Umsetzung zwischen einer Verbindung der allgemeinen Formel (8) und einer Verbindung der allgemeinen Formel (7) bei einer Temperatur zwischen 5 und 60°C, bevorzugt zwischen 10 und 55°C, und bei einem pH-Wert zwischen 3 und 9, bevorzugt zwischen 6 und 7, wobei man im Falle, daß in der Verbindung für Formel (8) Hal ein Fluoratom ist, bevorzugt die Umsetzung bei einer Temperatur zwischen 0 und 20°C durchführt.

Ebenfalls erfolgt die Umsetzung einer Verbindung der allgemeinen Formel (9) mit einer Verbindung der allgemeinen Formel A-NHR¹ bei einer Temperatur zwischen 5 und 40°C, bevorzugt zwischen 10 und 30°C, und bei einem pH-Wert zwischen 3 und 9, bevorzugt zwischen 4 und 6, wobei im Falle des Einsatzes einer Verbindung der allgemeinen Formel (9) mit Hal gleich Fluor bevorzugt die Umsetzung bei einer Temperatur zwischen 0 und 20°C durchgeführt wird.

Die Ausgangsverbindungen der allgemeinen Formel (8) lassen sich in an und für sich bekannter Verfahrensweise der Umsetzung von halogensubstituierten Triazinen mit aminogruppenhaltigen Verbindungen durchführen, wie dies beispielsweise oben für die erfindungsgemäßen Verfahrensweisen beschrieben ist, so ebenfalls in wäßrigem oder wäßrig-organischem Medium in der Regel bei einer Temperatur zwischen -5°C und +40°C, bevorzugt zwischen 0 und 30°C, und bei einem pH-Wert zwischen 2 und 10, bevorzugt zwischen 5 und 7, wobei man im Falle einer Ausgangsverbindung der Formel (6) mit Hal gleich Fluor bevorzugt eine Reaktionstemperatur zwischen -5°C und +5°C wählt. In gleicher Weise und unter den gleichen Verfahrensbedingungen lassen sich die Ausgangsverbindungen der allgemeinen Formel (9) durch Umsetzung einer Verbindung der allgemeinen Formel (6) mit einer Verbindung der allgemeinen Formel (7) herstellen.

Die Ausgangsverbindungen der allgemeinen Formel (6) und der allgemeinen Formel A-NHR¹ sind allgemein bekannt und in der Literatur zahlreich beschrieben. Verbindungen der allgemeinen Formel (6) sind beispielsweise Cyanurchlorid und Cyanurfluorid.

Ausgangsverbindungen der allgemeinen Formel A-NHR¹ sind beispielsweise
1-Amino-2-sulfo-4-(3'-sulfo-2',4',6'-trimethyl-5'-amino-phenyl)-amino-anthrachinon,
1-Amino-2-sulfo-4-(3'-sulfo-4'-amino-phenyl)-amino-anthrachinon,
1-Amino-2,7-disulfo-4-(3'-sulfo-4'-amino-phenyl)-amino-anthrachinon,
1-Amino-2,6-disulfo-4-(3'-sulfo-4'-amino-phenyl)-amino-anthrachinon,
1-Amino-2,7-disulfo-4-(4'-sulfo-3'-amino-phenyl)-amino-anthrachinon,
1-Amino-2,6-disulfo-4-(4'-sulfo-3'-amino-phenyl)-amino-anthrachinon,
1-Amino-2-sulfo-4-(4'-sulfo-3'-amino-phenyl)-amino-anthrachinon,
1-Amino-2-sulfo-4-(2',4'-disulfo-5'-amino-phenyl)-amino-anthrachinon,
1-Amino-2-sulfo-4-[3',2"-disulfo-4"-amino-diphenyl(4',1")]-amino-anthrachinon,
1-Amino-2-sulfo-4-[3''-sulfo-4''-amino-diphenyl(4',1'')]-amino-anthrachinon,
1-Amino-2-sulfo-4-(2'-sulfo-4'-aminomethyl-phenyl)-amino-anthrachinon,
1-Amino-2-sulfo-4-[2'-sulfo-4'-(N-methylamino)-methyl-phenyl]-amino-anthrachinon,
1-Amino-2,6-disulfo-4-(2'-sulfo-4'-amino-phenyl)-amino-anthrachinon,
1-Amino-2-sulfo-4-[2'-sulfo-4'-(N-methylamino)-methyl-phenyl]-amino-anthrachinon,
1-Amino-2-sulfo-4-(2'-sulfo-5'-aminomethyl-phenyl)-amino-anthrachinon,
1-Amino-2-sulfo-4-[2'-sulfo-5'-(N-methylamino)-methyl-phenyl]-amino-anthrachinon,
1-Amino-2-sulfo-4-(2'-sulfo-4'-methoxy-5'-aminomethyl-phenyl)-amino-anthrachinon,
1-Amino-2-sulfo-4-[2'-sulfo-4'-methoxy-5'-(N-methylamino)-methyl-phenyl]-amino-anthrachinon,
1-Amino-2-sulfo-4-(2'-sulfo-6'-methoxy-3'-aminomethyl-phenyl)-amino-anthrachinon,
1-Amino-2-sulfo-4-(3'-sulfo-2',6'-dimethyl-5'-aminomethyl-phenyl)-amino-anthrachinon,
1-Amino-2-sulfo-4-(2'-sulfo-4'-methyl-6'-aminomethyl-phenyl)-amino-anthrachinon,
1-Amino-2-sulfo-4-[2'-sulfo-4'-methyl-6'-(N-methylamino)-methyl-phenyl]-amino-anthrachinon,
1-Amino-2,6-disulfo-4-[2'-sulfo-4'-methyl-6'-aminomethyl-phenyl]-amino-anthrachinon,
1-Amino-2-sulfo-4-(2'-sulfo-6'-methyl-4'-amino-phenyl)-amino-anthrachinon,
1-Amino-2-sulfo-4-(4'-sulfo-6'-methyl-3'-amino-phenyl)-amino-anthrachinon,
1-Amino-2-suifo-4-(3'-sulfo-2',4',6'-trimethyl-5'-aminomethyl-phenyl)-amino-anthrachinon,
1-Amino-2,6-disulfo-4-(3'-sulfo-6'-methyl-5'-amino-phenyl)-amino-anthrachinon,
1-Amino-2-sulfo-4-(3'-sulfo-6'-methyl-5'-amino-phenyl)-amino-anthrachinon,
1-Amino-2,5-disulfo-4-(6'-methyl-5'-amino-phenyl)-amino-anthrachinon,
1-Amino-2,6-disulfo-4-(6'-methyl-5'-amino-phenyl)-amino-anthrachinon,
1-Amino-2,5,8-trisulfo-4-(4'-amino-phenyl)-amino-anthrachinon,
1-Amino-2,6-disulfo-4-[2'-sulfo-4'-(N-methylamino)-methyl-phenyl]-amino-anthrachinon,
1-Amino-2,7-disulfo-4-[2'-sulfo-4'-(N-methylamino)-methyl-phenyl]-amino-anthrachinon,
1-Amino-2,5,8-trisulfo-4-[4'-(N-methylamino)-methyl-phenyl]-amino-anthrachinon,
1-Amino-2,8-disulfo-4-[4'-(N-methylamino)-methyl-phenyl]-amino-anthrachinon,
1-Amino-2,6-disulfo-4-(4'-amino-phenyl)-amino-anthrachinon,
1-Amino-2,7-disulfo-4-(4'-amino-phenyl)-amino-anthrachinon,
1-Amino-2,5-disulfo-4-(4'-amino-phenyl)-amino-anthrachinon,
1-Amino-2,6-disulfo-4-(3'-amino-phenyl)-amino-anthrachinon,
1-Amino-2,5-disulfo-4-(3'-amino-phenyl)-amino-anthrachinon,
1-Amino-2,6-disulfo-4-(3'-sulfo-2',6'-dimethyl-5'-aminomethyl-phenyl)-amino-anthrachinon,
1-Amino-2,6-disulfo-4-[3'-sulfo-2',6'-dimethyl-5'-(N-methylamino)-methyl-phenyl]-amino-anthrachinon,
1-Amino-2,7-disulfo-4-(3'-sulfo-2',6'-dimethyl-5'-aminomethyl-phenyl)-amino-anthrachinon,
1-Amino-2,7-disulfo-4-[3'-sulfo-2',6'-dimethyl-5'-(N-methylamino)-methyl-phenyl]-amino-anthrachinon,
1-Amino-2,7-disulfo-4-[2',6'-dimethyl-5'-(N-methylamino)-methyl-phenyl]-amino-anthrachinon,
1-Amino-2,5-disulfo-4-(2'-sulfo-4'-methyl-3'-aminomethyl-phenyl)-amino-anthrachinon,
1-Amino-2,8-disulfo-4-(4'-methyl-3'-aminomethyl-phenyl)-amino-anthrachinon,
1-Amino-2,5,8-trisulfo-4-(2',6'-dimethyl-3'-aminomethyl-phenyl)-amino-anthrachinon,
1-Amino-2,7-disulfo-4-[4'-methoxy-3'-(N-methylamino)-methylphenyl]-amino-anthrachinon,
1-Amino-2,5-disulfo-4-[2'-sulfo-4'-methoxy-3'-(N-methylamino)-methylphenyl]-amino-anthrachinon,
1-Amino-2,8-disulfo-4-(2'-sulfo-3'-aminomethyl-phenyl)-amino-anthrachinon,
1-Amino-2,7-disulfo-4-(2'-sulfo-4'-methoxy-3'-aminomethyl-phenyl)-amino-anthrachinon,
1-Amino-2,5-disulfo-4-(3'-sulfo-4'-amino-phenyl)-amino-anthrachinon,
1-Amino-2,5-disulfo-4-(3'-sulfo-6'-methyl-5'-amino-phenyl)-amino-anthrachinon,
1-Amino-2-sulfo-4-[3'-(4"-sulfo-3"-amino-phenyl)-sulfonylamidosulfonyl-phenyl]-amino-anthrachinon,
1-Amino-2,6-disulfo-4-[4'-(4"-amino-phenyl)-sulfonylamidosulfonyl-phenyl]-amino-anthrachinon und
1-Amino-2-sulfo-4-[3'-(4"-amino-phenyl)-sulfonylamidosulfonyl-phenyl]-amino-anthrachinon.

Die Ausgangsverbindungen der allgemeinen Formel (7) sind teilweise bekannt (s. J. Org. Chem. 31, 959 (1966)); die Verbindungen 2-Methoxy-5-methyl-4-cyanamidosulfonyl-anilin, 2,5-Dimethoxy-4-cyanamidosulfonyl-anilin sind neu und deshalb ebenfalls Gegenstand der Erfindung.

Die Verbindungen der allgemeinen Formel (7) lassen sich herstellen, indem man von einer Nitroverbindung der allgemeinen Formel (10) 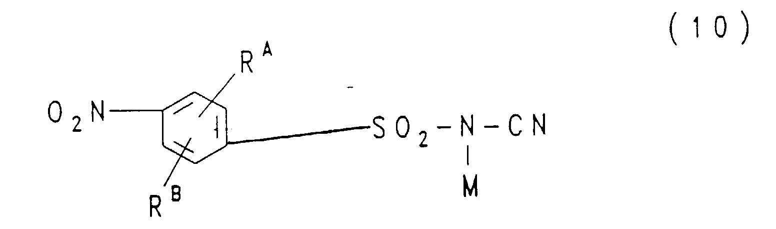 in welcher R^{A}, R^{B}, M die obengenannten Bedeutungen besitzen, ausgeht und diese in üblicher Weise, bevorzugt katalytisch in wäßriger Lösung oder Suspension, zur Verbindung der allgemeinen Formel (7), in welcher R² gleich Wasserstoff ist, reduziert. Bevorzugt erhält man sie jedoch durch Umsetzung der Sulfochloride der N-Alkanoyl-aniline, bevorzugt hiervon der N-Acetyl-aniline, mit Cyanamid oder einem Salz des Cyanamids in wäßriger Suspension bei einer Temperatur zwischen 0 und 30°C und einem pH-Wert zwischen 6 und 12 und unter anschließender Hydrolyse der Alkanoylaminogruppe zur Aminogruppe der Anilinverbindung der allgemeinen Formel (7) mit R² gleich Wasserstoff. Die Einführung einer Alkylgruppe (bei R² gleich Alkyl) kann danach in üblicher Weise analog bekannten Verfahrensweisen mit Hilfe eines Alkylierungsmittels, wie eines Dialkylsulfats, erfolgen.

Die Ausgangsverbindungen der allgemeinen Formel (10) lassen sich analog literaturbekannten Verfahrensweisen (s. J. Org. Chem. 31, 959 (1966) und Chem. Ind. (London) 1963, 1559), herstellen, so beispielsweise durch Umsetzung der Säurechloride der allgemeinen Formel (11) 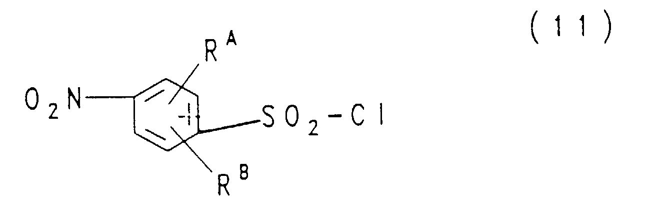 in welcher R^{A} und R^{B} die obengenannte Bedeutung besitzt, mit Cyanamid oder einem Salz des Cyanamids in wäßriger Suspension bei einer Temperatur zwischen 0 und 20°C und unter Einhaltung eines pH-Wertes zwischen 7 und 11.

Ausgangsverbindung der allgemeinen Formel (7) sind insbesondere 4-Cyanamidosulfonyl-anilin, 2-Methoxy-4-cyanamidosulfonyl-anilin, 2,5-Dimethoxy-4-cyanamidosulfonyl-anilin.

Die Abscheidung der erfindungsgemäß hergestellten Farbstoffe der allgemeinen Formel (1), nachfolgend als "Farbstoffe (1)" bezeichnet, aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Sie haben faserreaktive Eigenschaften und besitzen sehr gute Farbstoffeigenschaften. Sie können deshalb zum Färben und Bedrucken von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der Farbstoffe (1) zum Färben und insbesondere Bedrucken von hydroxy- und carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern, regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Farbstoffe (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern Färbungen in guten Farbausbeuten. Man färbt bei Temperaturen zwischen 40 und 105°C, gegebenenfalls bei Temperaturen bis zu 130°C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls Färbungen mit ausgezeichneten Farbausbeuten erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, - die bevorzugt einphasig durchgeführt werden, beispielsweise durch Bedrucken mit einer Natriumbicarbonat oder ein anderes säurebindendes Mittel und den Farbstoff (1) enthaltenden Druckpaste und durch anschließendes Dämpfen bei 100 bis 103°C, oder zweiphasig durchgeführt werden können, beispielsweise durch Bedrucken mit neutraler oder schwach saurer, den Farbstoff (1) enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den Farbstoffen (1) erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freizusetzen vermögen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe (1) mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemäßen Farbstoffen (1) hergestellten Färbungen und Drucke besitzen eine hohe Farbstärke, außerdem gute Lichtechtheiten und gute Naßechtheiten, wie Wasch-, Walk-, Wasser-, Seewasser-, Überfärbe- und Schweißechtheiten, darüber hinaus eine gute Plissierechtheit, Bügelechtheit und Reibechtheit. Besonders hervorzuheben sind deren alkalische Schweißlichtechtheit und die gute Naßlichtechtheit der mit Trinkwasser benetzten Färbungen.

Die nachstehenden Beispiele dienen zur Erläuterung der Erfindung. Die formelmäßig beschriebenen Verbindungen sind in Form der freien Säure angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

Die für die erfindungsgemäßen Verbindungen angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

Die ¹³C-NMR-Analysen erfolgten in Dimethylsulfoxid und mit Tetramethylsilan als innerem Standard, sofern nicht anders angegeben.

### Beispiel A

302 Teile 4-Acetylamino-benzolsulfochlorid werden in 1500 Teilen Wasser von 0°C suspendiert; 75,6 Teile Cyanamid werden hinzugegeben, und es wird mittels wäßriger Natronlauge ein pH-Wert zwischen 10 und 11 eingestellt, der während der Umsetzung, die man bei einer Temperatur zwischen 20 und 30°C während etwa zwei Stunden durchführt, gehalten wird. Danach gibt man 400 Vol.-Teile einer 33%igen wäßrigen Natronlauge hinzu, erhitzt den Ansatz während einer Stunde bei 100°C und stellt sodann mit wäßriger Salzsäure einen pH-Wert zwischen 5 und 6 ein. Man erhält die wäßrige Lösung des Natriumsalzes des 4-Cyanamidosulfonylanilins, die direkt in die Synthese der erfindungsgemäßen Anthrachinonverbindungen entsprechend der allgemeinen Formel (1) eingesetzt werden kann.

Das 4-Cyanamidosulfonyl-anilin selbst kann als fester Stoff bei einem pH-Wert von 2 und bei etwa 10°C aus dem Ansatz ausgefällt und isoliert werden.

### Beispiel C

Zur Herstellung der Ausgangsverbindung 2,5-Dimethoxy-4-cyanamidosulfonyl-anilin kann man analog den Angaben des Beispieles A oder B vorgehen, wenn man anstelle von 3-Acetylamino-4-methoxy-benzolsulfonsäurechlorid die äquivalente Menge an 4-Acetylamino-2,5-dimethoxy-benzolsulfonsäurechlorid einsetzt. In gleicher Weise kann man, ausgehend von 3-Acetylamino-4-chlor-benzolsulfonsäurechlorid, das 2-Chlor-5-cyanamido-sulfonyl-anilin sowie, ausgehend von 4-Acetylamino-2-methoxy-5-methyl-benzolsulfonsäurechlorid, das 2-Methoxy-5-methyl-4-cyanamidosulfonyl-anilin herstellen.

### Beispiel 1

In eine Lösung von 0°C von 20,5 Teilen 1-Amino-4-(3'-amino-2',4',6'-trimethyl-phenyl)-amino-anthrachinon-2,5'-disulfonsäure in 250 Teilen Wasser werden 7,7 Teile 2,4,6-Trichlor-s-triazin gegeben; während der etwa einstündigem Umsetzung bei 0°C wird mittels wäßrigen Natronlauge ein pH-Wert von 4 gehalten. Danach gibt man 7,3 Teile 4-Cyanamidosulfonyl-anilin hinzu, erhöht die Temperatur des Ansatzes auf 50°C und führt die zweite Umsetzung bei einem pH-Wert von 6 während zwei Stunden durch.
Die erfindungsgemäße Anthrachinonverbindung wird in üblicher Weise durch Aussalzen mit Natriumchlorid isoliert. Sie besitzt, in Form der freien Säure geschrieben, die Formel 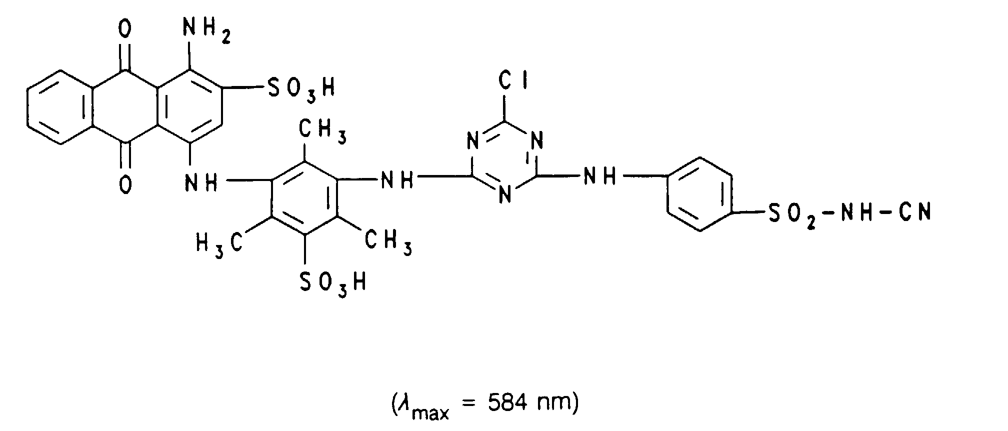 und zeigt sehr gute Farbstoffeigenschaften. Sie liefert gemäß den in der Technik für faserreaktive Farbstoffe üblichen Anwendungsverfahren auf den in der Beschreibung genannten Materialien, insbesondere Cellulosefasermaterialien, wie Baumwolle, farbstarke, echte Färbungen und Drucke in brillanten blauen Tönen mit guten Echtheitseigenschaften.

### Beispiel 2

Man verfährt zur Herstellung eines erfindungsgemäßen Anthrachinonfarbstoffes analog den Angaben des Beispieles 1, setzt jedoch anstelle der dort angegebenen Anthrachinon-Ausgangsverbindung die äquivalente Menge an 1-Amino-4-(2'-methyl-3'-amino-phenyl)-amino-anthrachinon-2,5'-disulfonsäure ein. Man isoliert den erfindungsgemäßen Anthrachinonfarbstoff der Formel 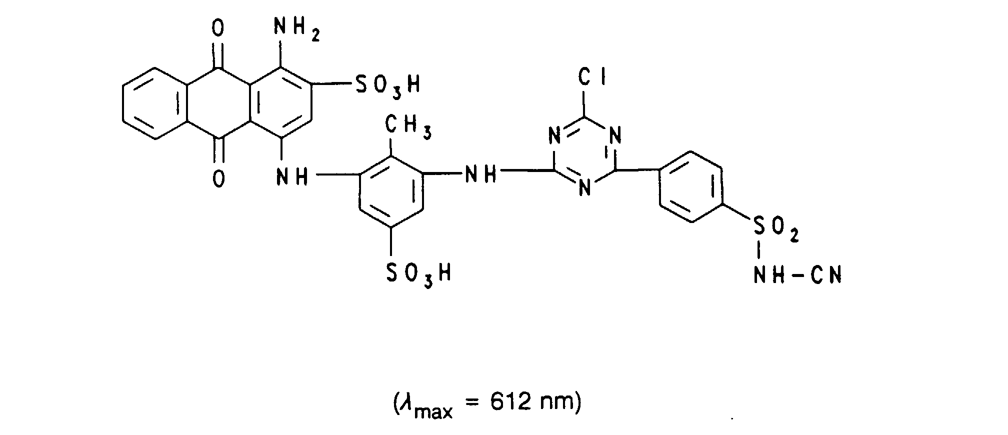 als Natriumsalz. Man erhält mit ihm auf den in der Beschreibung genannten Materialien, insbesondere Cellulosefasermaterialien, nach den in der Technik für faserreaktive Farbstoffe üblichen Applikations- und Fixierverfahren farbstarke, echte, brillante blaue Färbungen und Drucke.

### Beispiel 3

Zu einer Lösung von 51 Teilen 1-Amino-4-(3'-amino-2',4',6-trimethyl-phenyl)-amino-anthrachinon-2,4'-disulfonsäure in 350 Teilen Wasser von 0°C werden langsam innerhalb von etwa 10 Minuten unter Einhaltung dieser Temperatur und einem pH-Wert von 5 10 Volumenteilen Cyanurfluorid gegeben; während der Umsetzung wird der pH-Wert von 5 mittels wäßriger 2n-Natronlauge gehalten. Danach gibt man 23 Teile 4-Cyanamidosulfonyl-anilin hinzu, erhöht die Temperatur des Ansatzes auf 5 bis 10°C und führt die Umsetzung bei einem pH-Wert von 6 während 3 Stunden durch.
Der erfindungsgemäße Anthrachinonfarbstoff wird mittels Natriumchlorid ausgesalzen und als Alkalimetallsalz in Form eines blauen elektrolytsalzhaltigen (natriumchloridhaltigen) blauen Pulvers isoliert. Er besitzt, in Form der freien Säure geschrieben, die Formel 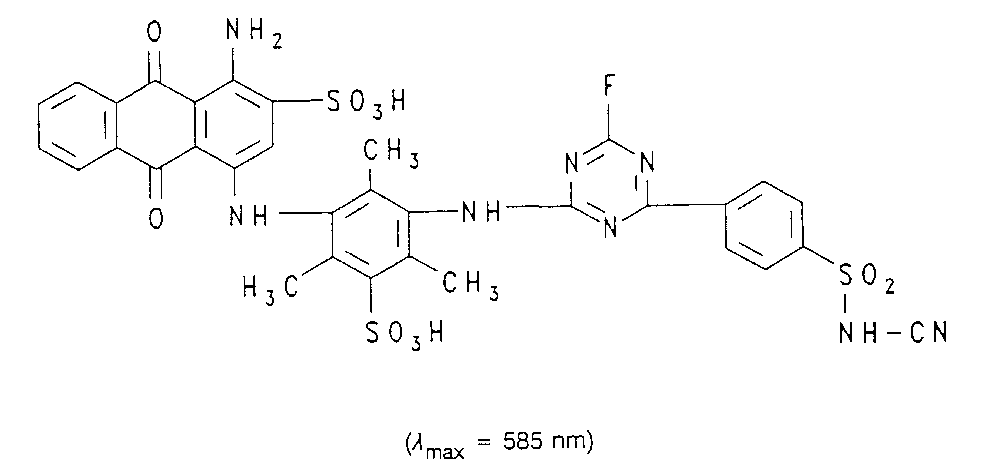 zeigt sehr gute Farbstoffeigenschaften und färbt beispielsweise Baumwolle nach den in der Technik für faserreaktive Farbstoffe üblichen Anwendungsverfahren in echten, brillanten blauen Tönen.

### Beispiele 4 bis 12

In den nachstehenden Tabellenbeispielen sind weitere erfindungsgemäße Anthrachinonfarbstoffe entsprechend einer allgemeinen Formel (A) 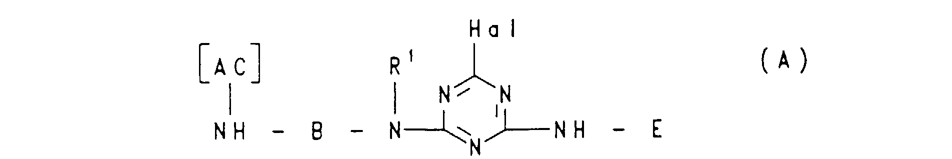 mit Hilfe ihrer Komponenten (dem Anthrachinonrest AC entsprechend der allgemeinen Formel (a) 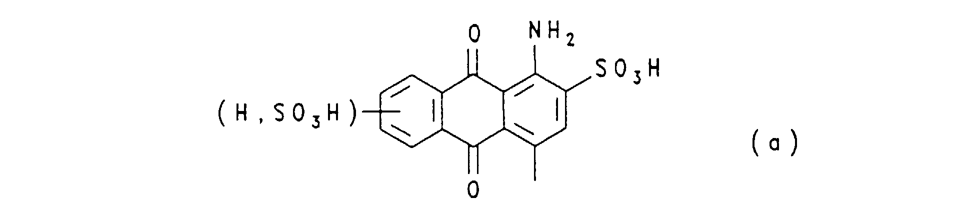 dem bivalenten Rest B, dem Halogenatom Chlor oder Fluor und dem Cyanamidosulfonyl-phenyl-Rest E) beschrieben. Sie lassen sich in erfindungsgemäßer Weise, beispielsweise analog einem der oben angegebenen Beispiele unter Einsatz einer Anthrachinonverbindung entsprechend der allgemeinen Formel AC-NH-B-NHR¹, Cyanurchlorid oder Cyanurfluorid und einer Cyanamidosulfonyl-anilin-Verbindung entsprechend der allgemeinen Formel H₂N-E herstellen. Diese neuen Anthrachinonfarbstoffe besitzen sehr gute faserreaktive Farbstoffeigenschaften und färben die in der Beschreibung genannten Materialien, insbesondere Cellulosefasermaterialien, wie Baumwolle, in dem in dem jeweiligen Tabellenbeispiel (hier für Baumwolle) angegebenen Farbton in hoher Farbstärke und mit guten Echtheiten.

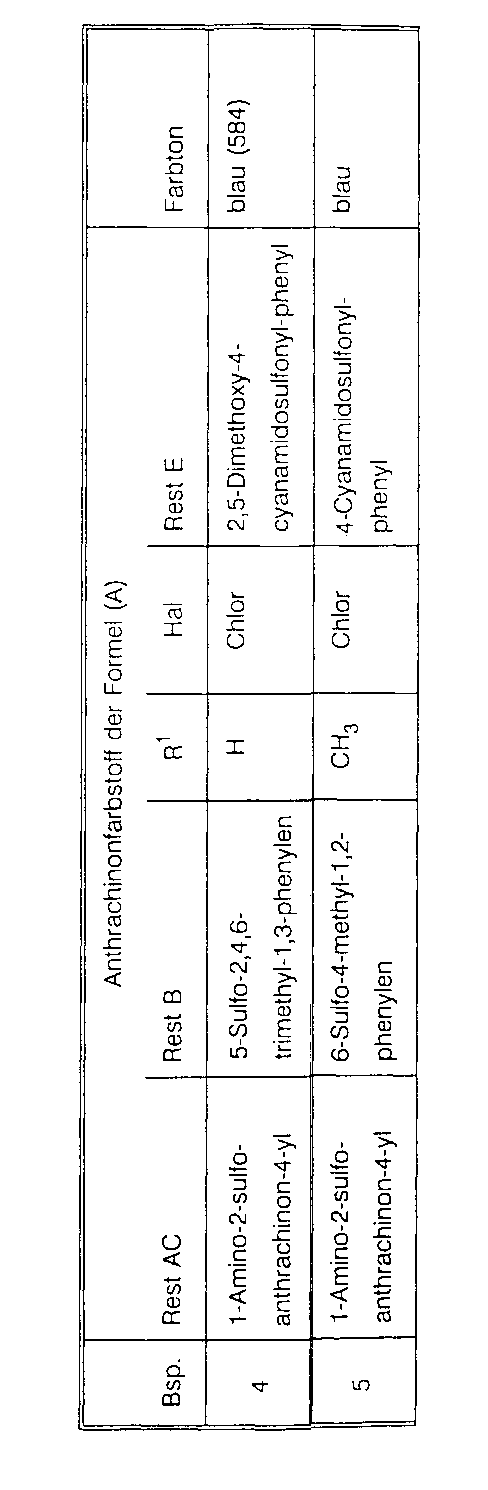

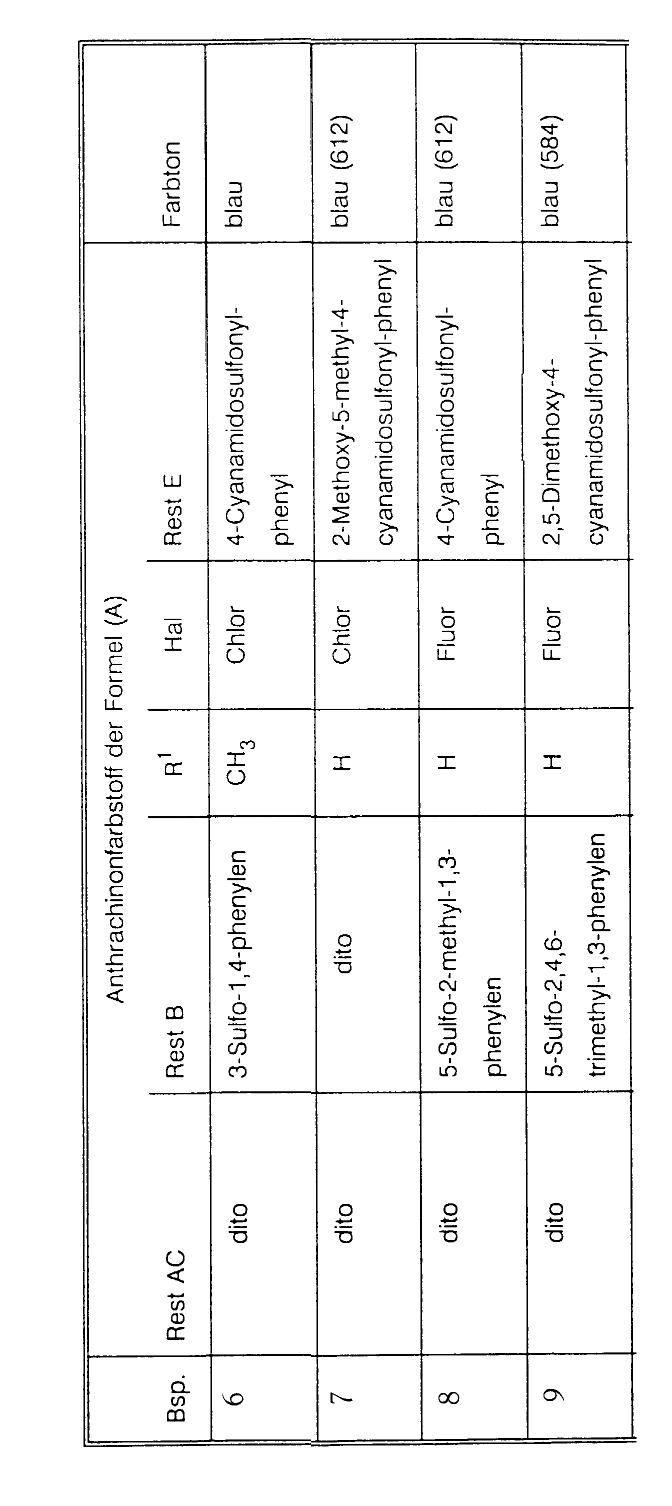

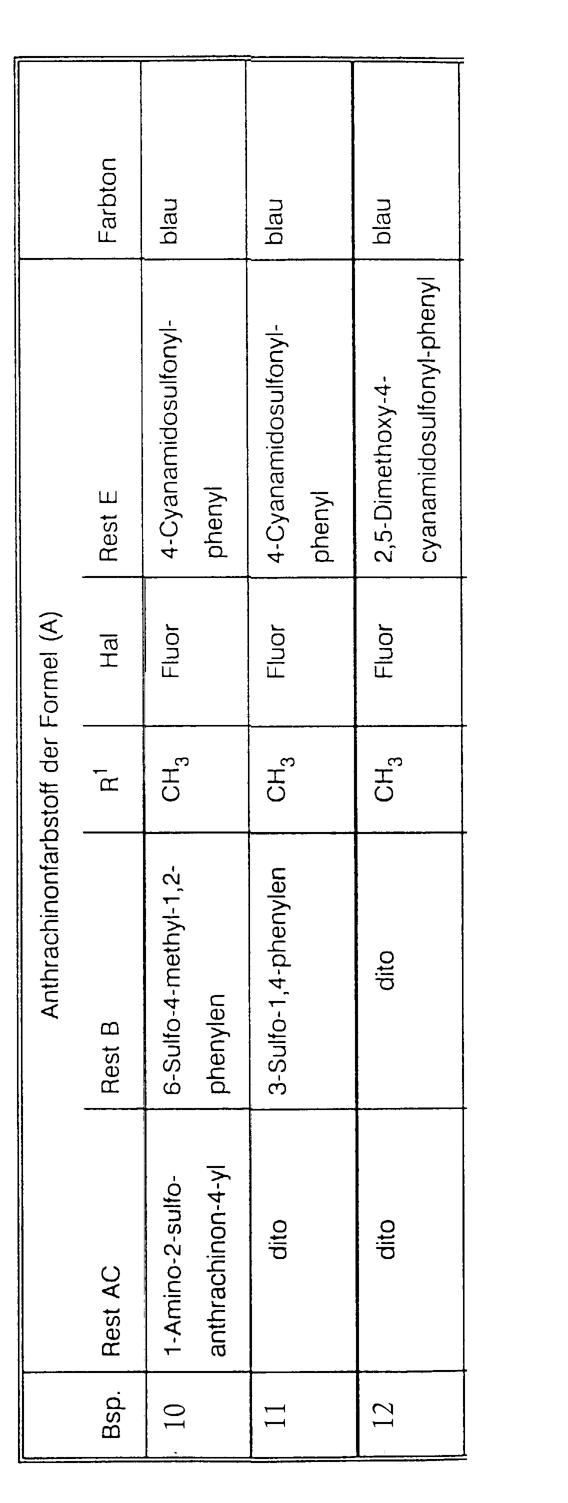

## Patentansprüche

1. Anthrachinonverbindung entsprechend der allgemeinen Formel (1) 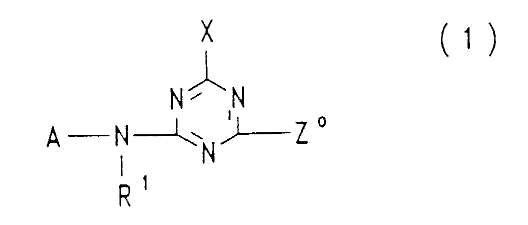 in welcher bedeuten:
A ist ein Rest der allgemeinen Formel (2) 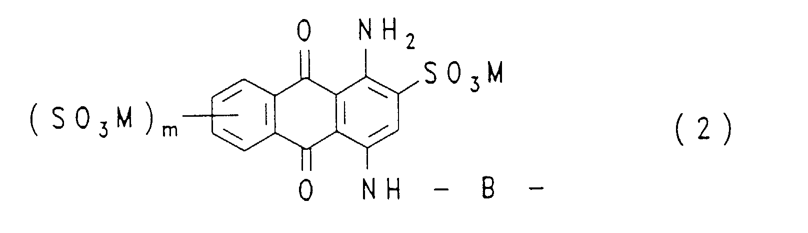
in welcher
M Wasserstoff oder ein Alkalimetall, wie Natrium, Kalium und Lithium, oder das Moläquivalent eines Erdalkalimetalls,
m die Zahl Null oder 1 bedeutet (wobei im Falle von m gleich Null diese Gruppe für Wasserstoff steht) und
B Phenylen ist, das durch 1 bis 4 Substituenten substituiert sein kann, die aus der folgenden Menge von Substituenten ausgewählt sind: 2 Sulfo, 1 Carboxy, 4 Alkyl von 1 bis 4 C-Atomen und 2 Alkoxy von 1 bis 4 C-Atomen, oder Naphthylen bedeutet, das durch 1, 2 oder 3 Sulfogruppen substituiert sein kann, oder ein Rest der allgemeinen Formel -phen-D-phen- ist, in welcher phen jedes, zueinander gleich oder voneinander verschieden, einen Phenylenrest bedeutet, der unsubstituiert oder durch 1 oder 2 Substituenten aus der Gruppe Sulfo, Alkyl von 1 bis 4 C-Atomen und Alkoxy von 1 bis 4 C-Atomen substituiert ist, und D eine direkte Bindung oder eine Gruppe der Formel -NH- , -O- , -SO₂- , -CO-NH- , -NH-CO-, -SO₂-NH-, -NH-SO₂- oder -SO₂-NH-SO₂- ist;
R¹ ist Wasserstoff oder Alkyl von 1 bis 4 C-Atomen;
X ist ein unter Einwirkung eines alkalisch wirkenden Mittels abspaltbarer Rest;
Z^{o} ist ein Rest der allgemeinen Formel (3) 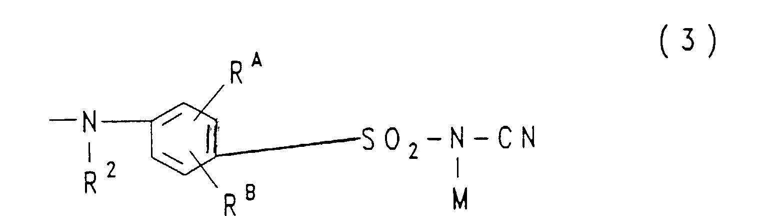
in welcher
M die obengenannte Bedeutung hat,
R² Wasserstoff oder Alkyl von 1 bis 4 C-Atomen ist;
R^{A} Wasserstoff, Alkyl von 1 bis 4 C-Atomen oder Alkoxy von 1 bis 4 C-Atomen ist, und
R^{B} Wasserstoff, Chlor, Brom oder Alkoxy von 1 bis 4 C-Atomen ist.

2. Anthrachinonverbindung nach Anspruch 1 der allgemeinen Formel (1a) 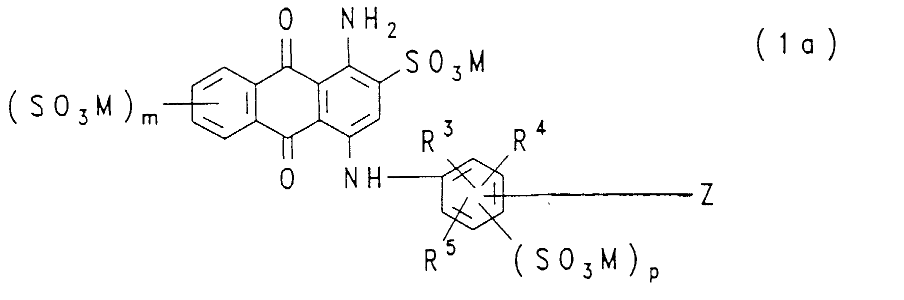 in welcher bedeuten:
M und m haben die in Anspruch 1 genannten Bedeutungen;
R³ ist Wasserstoff oder Alkyl von 1 bis 4 C-Atomen;
R⁴ ist Wasserstoff oder Alkyl von 1 bis 4 C-Atomen;
R⁵ ist Wasserstoff oder Alkyl von 1 bis 4 C-Atomen;
p ist die Zahl Null, 1 oder 2 (wobei im Falle von p gleich Null diese Gruppe Wasserstoff bedeutet);
Z ist ein Rest der allgemeinen Formel (4) 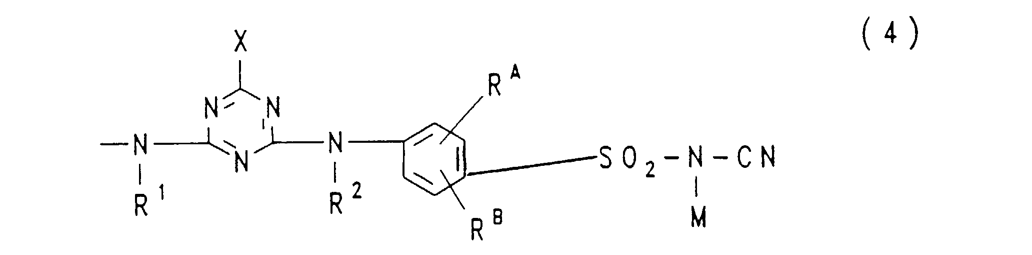 in welcher R¹, R², R^{A}, R^{B}, M, und X die in Anspruch 1 genannten Bedeutungen haben.

3. Anthrachinonverbindung nach Anspruch 1 entsprechend der allgemeinen Formel (5) 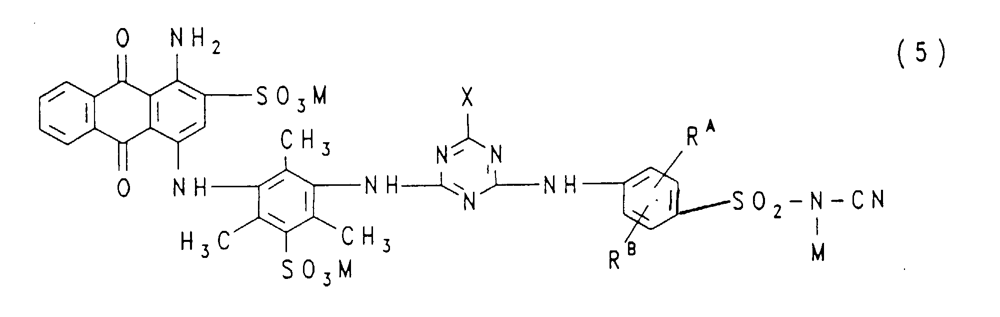 in welcher M, R^{A} und R^{B} die in Anspruch 1 genannten Bedeutungen haben und X für Chlor oder Fluor steht.

4. Anthrachinonverbindung nach mindestens einem der Ansprüche 1 bis 3, dadurch gekennzeichnet, daß X für Chlor steht.

5. Anthrachinonverbindung nach mindestens einem der Ansprüche 1 bis 3, dadurch gekennzeichnet, daß X für Fluor steht.

6. Anthrachinonverbindung nach Anspruch 1 der Formel 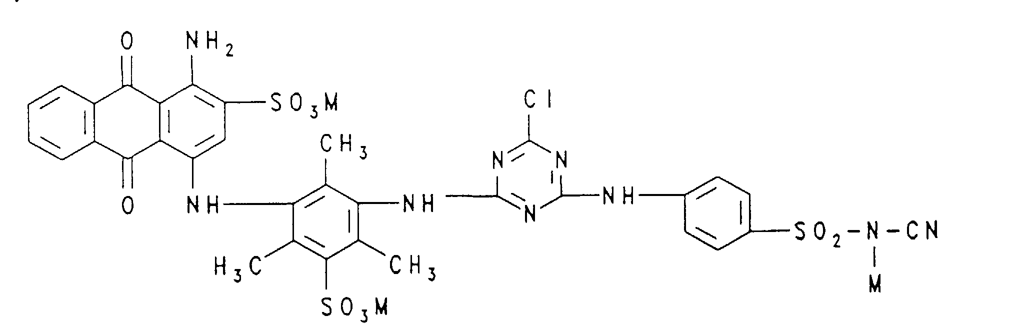 in welcher M die in Anspruch 1 genannte Bedeutung besitzt.

7. Anthrachinonverbindung nach Anspruch 1 der Formel 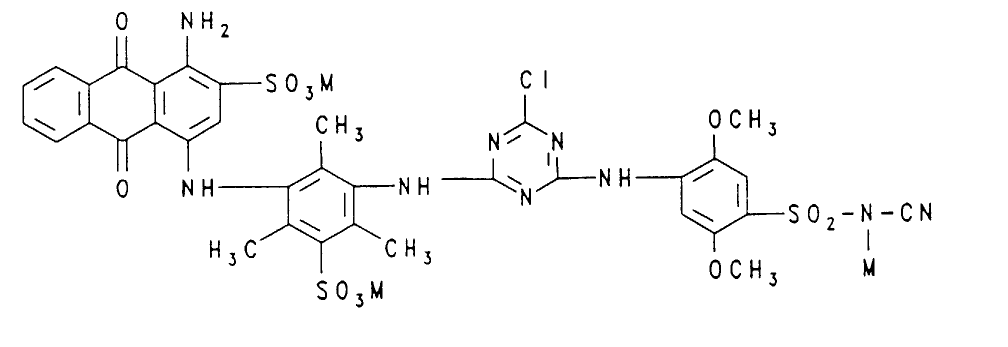 in welcher M die in Anspruch 1 genannte Bedeutung besitzt.

8. Verfahren zur Herstellung einer Verbindung der in Anspruch 1 genannten und definierten allgemeinen Formel (1), dadurch gekennzeichnet, daß man eine Halogen-s-triazinverbindung der allgemeinen Formel (6) 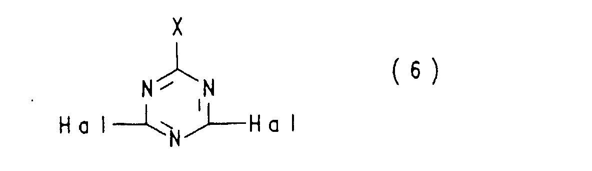 in welcher X die in Anspruch 1 genannte Bedeutung besitzt und Hal für Halogen steht, mit einer aminogruppenhaltigen Anthrachinonverbindung der allgemeinen Formel A-NH-R¹ mit A und R¹ der in Anspruch 1 genannten Bedeutung und mit einer Aminoverbindung der allgemeinen Formel (7) 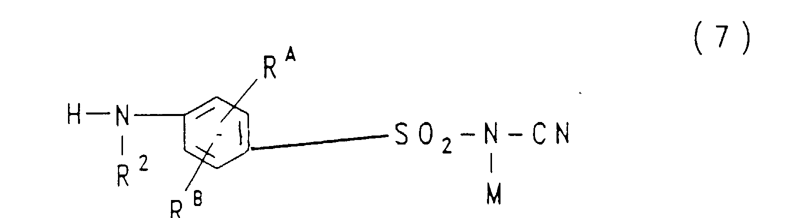 in welcher R², R^{A}, R^{B}, M die in Anspruch 1 genannten Bedeutungen haben, in beliebiger Reihenfolge miteinander umsetzt.

9. Verwendung eines Anthrachinonfarbstoffes von mindestens einem der Ansprüche 1 bis 7 oder eines nach Anspruch 8 hergestellten Anthrachinonfarbstoff zum Färben und Bedrucken von hydroxy- und/oder carbonamidgruppenhaltigem Material, insbesondere Fasermaterial.

10. Verfahren zum Färben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß man als Farbstoff einen Anthrachinonfarbstoff von mindestens einem der Ansprüche 1 bis 7 oder einen nach Anspruch 8 hergestellten Anthrachinonfarbstoff verwendet.

11. Eine oder mehrere Verbindungen der folgenden Gruppe: 2-Methoxy-5-methyl-4-cyanamidosulfonyl-anilin, 2,5-Dimethoxy-4-cyanamidosulfonyl-anilin, N-[(C₂-C₅)-Alkanoyl]-2-methoxy-5-methyl-4-cyanamidosulfonyl-anilin, N-[(C₂-C₅)-Alkanoyl]-2,5-dimethoxy-4-cyanamidosulfonyl-anilin.

12. Verbindung der allgemeinen Formel 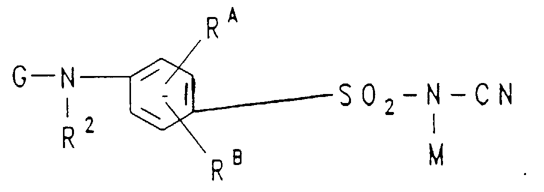 in welcher bedeuten:
R^{A} ist Alkyl von 1 bis 4 C-Atomen oder Alkoxy von 1 bis 4 C-Atomen;
R^{B} ist Wasserstoff, Chlor, Brom oder Alkoxy von 1 bis 4 C-Atomen;
R² ist Wasserstoff oder Alkyl von 1 bis 4 C-Atomen;
M ist Wasserstoff oder ein Alkalimetall oder das Moläquivalent eines Erdalkalimetalls und
G ist Alkanoyl von 2 bis 5 C-Atomen.

## Claims

1. An anthraquinone compound conforming to the formula (1) 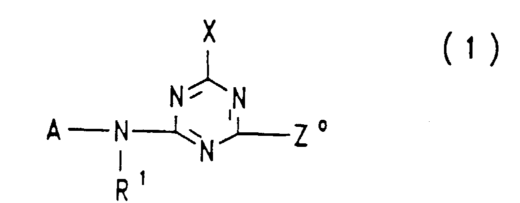 where
A is a radical of the formula (2) 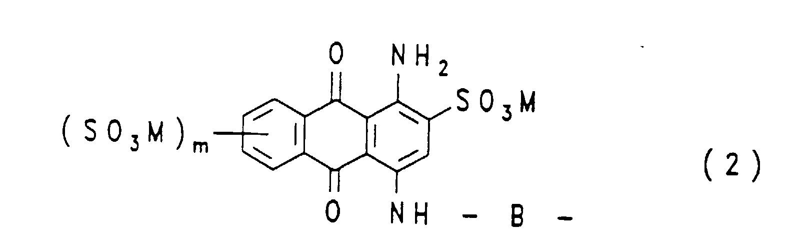
where
M is hydrogen or an alkali metal, such as sodium, potassium and lithium, or the mole equivalent of an alkaline earth metal,
m is zero or 1 (when zero, the group in question is hydrogen) and
B is phenylene which can be substituted by 1 to 4 substituents selected from the following group of substituents: 2 sulfo, 1 carboxyl, 4 alkyl of 1 to 4 carbon atoms and 2 alkoxy of 1 to 4 carbon atoms, or is naphthylene which can be substituted by 1, 2 or 3 sulfo groups, or is a radical of the formula -phen-D-phen-, in which each phen, identical to or different from the other, is phenylene which is unsubstituted or substituted by 1 or 2 substituents from the group consisting of sulfo, alkyl of 1 to 4 carbon atoms and alkoxy of 1 to 4 carbon atoms, and D is a direct bond or a group of the formula -NH-, -O-, -SO₂-, -CO-NH-, -NH-CO-, -SO₂-NH-, -NH-SO₂- or -SO₂-NH-SO₂-,
R¹ is hydrogen or alkyl of 1 to 4 carbon atoms,
X is an alkali-detachable radical,
Z^{o} is a radical of the formula (3) 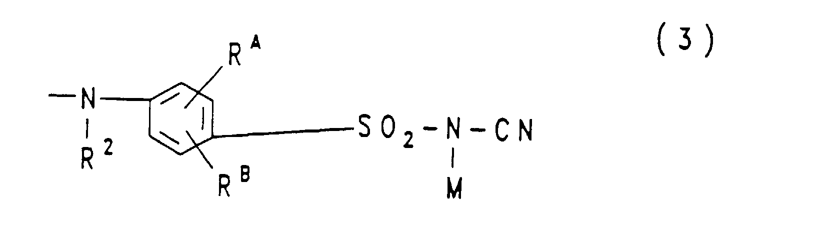
where
M is as defined above,
R² is hydrogen or alkyl of 1 to 4 carbon atoms,
R^{A} is hydrogen, alkyl of 1 to 4 carbon atoms, or alkoxy of 1 to 4 carbon atoms, and
R^{B} is hydrogen, chlorine, bromine or alkoxy of 1 to 4 carbon atoms.

2. An anthraquinone compound as claimed in claim 1 of the formula (1a) 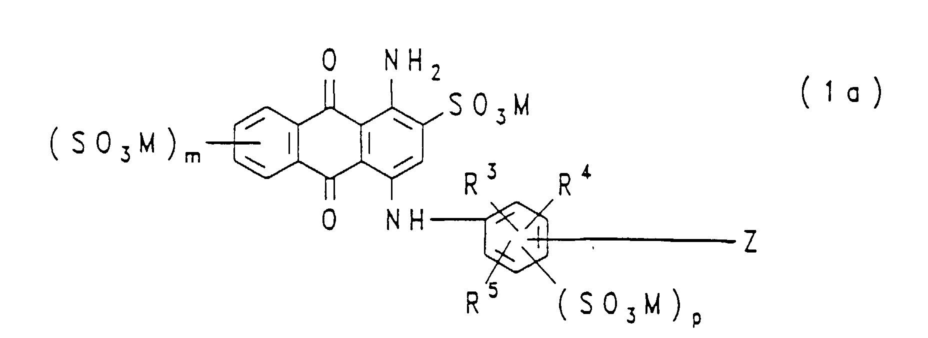 where
M and m are as defined in claim 1,
R³ is hydrogen or alkyl of 1 to 4 carbon atoms,
R⁴ is hydrogen or alkyl of 1 to 4 carbon atoms,
R⁵ is hydrogen or alkyl of 1 to 4 carbon atoms,
p is zero, 1 or 2 (when zero, the group in question is hydrogen), and
Z is a radical of the formula (4) 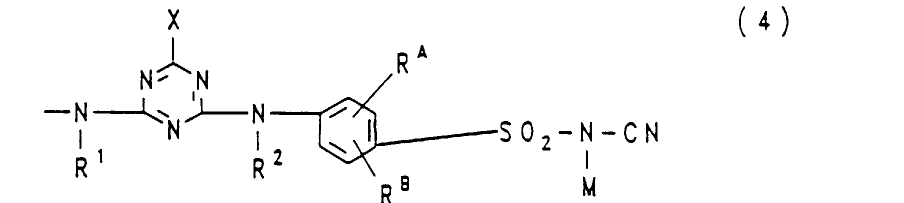 where R¹, R², R^{A}, R^{B}, M and X are each as defined in claim 1.

3. An anthraquinone compound as claimed in claim 1 conforming to the formula (5) 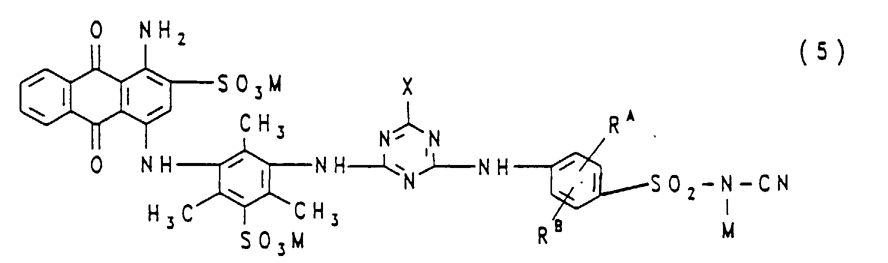 where M, R^{A} and R^{B} are each as defined in claim 1 and X is chlorine or fluorine.

4. An anthraquinone compound as claimed in at least one of claims 1 to 3, wherein X is chlorine.

5. An anthraquinone compound as claimed in at least one of claims 1 to 3, wherein X is fluorine.

6. An anthraquinone compound as claimed in claim 1 of the formula 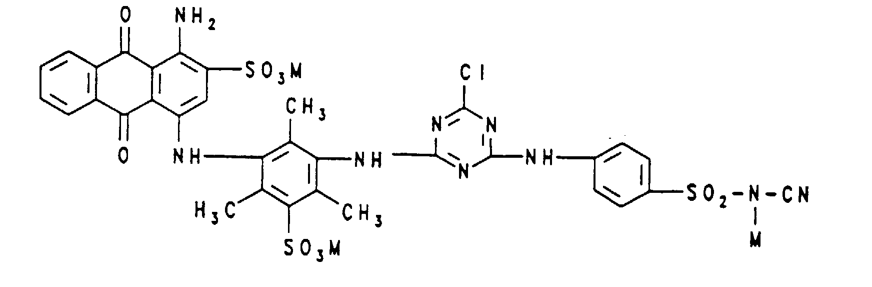 where M is as defined in claim 1.

7. An anthraquinone compound as claimed in claim 1 of the formula 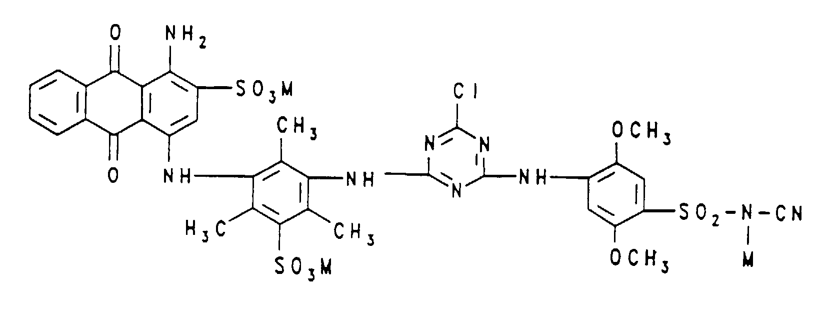 where M is as defined in claim 1.

8. A process for preparing a compound of the formula (1) mentioned and defined in claim 1, which comprises reacting a halo-s-triazine compound of the formula (6) 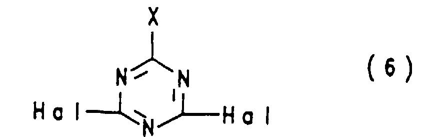 where X is as defined in claim 1 and Hal is halogen, with an amino-containing anthraquinone compound of the formula A-NH-R¹, where A and R¹ are each as defined in claim 1, and with an amino compound of the formula (7) 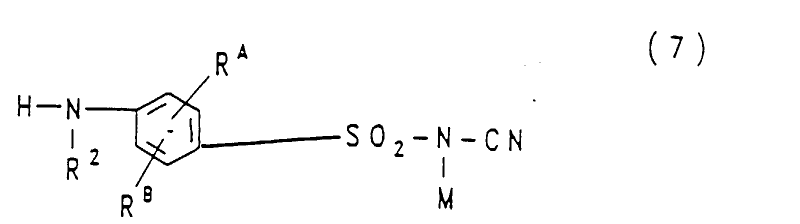 where R², R^{A}, R^{B} and M are each as defined in claim 1, in any desired order.

9. The use of an anthraquinone dye of at least one of claims 1 to 7 or of an anthraquinone dye prepared as claimed in claim 8, for dyeing and printing hydroxyl- and/or carboxamido-containing material, in particular fiber material.

10. A process for dyeing and printing hydroxyl- and/or carboxamido-containing material, preferably fiber material, by applying a dye to the material and fixing it thereon by means of heat, or with the aid of an alkali, or by means of heat and with the aid of an alkali, which comprises using a dye that is an anthraquinone dye of at least one of claims 1 to 7 or an anthraquinone dye prepared as claimed in claim 8.

11. One or more compounds of the following group: 2-methoxy-5-methyl-4-cyanamidosulfonylaniline, 2,5-dimethoxy-4-cyanamidosulfonylaniline, N- [(C₂-C₅)alkanoyl]-2-methoxy-5-methyl-4-cyanamidosulfonylaniline, N- [(C₂-C₅)alkanoyl]-2,5-dimethoxy-4-cyanamidosulfonylaniline.

12. A compound of the formula 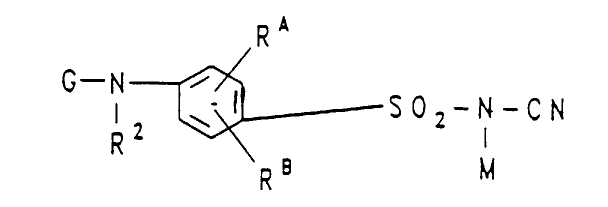 where
R^{A} is alkyl of 1 to 4 carbon atoms or alkoxy of 1 to 4 carbon atoms,
R^{B} is hydrogen, chlorine, bromine or alkoxy of 1 to 4 carbon atoms,
R² is hydrogen or alkyl of 1 to 4 carbon atoms,
M is hydrogen or an alkali metal or the mole equivalent of an alkaline earth metal, and
G is alkanoyl of 2 to 5 carbon atoms.

## Revendications

1. Composé anthraquinone selon la formule générale (1) 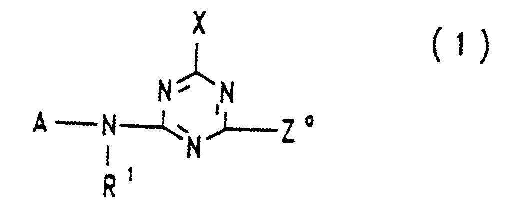 dans laquelle:
A est un radical de formule générale (2) 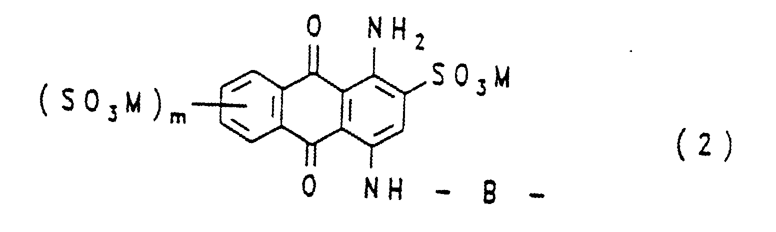
dans laquelle
M représente un hydrogène ou un métal alcalin, tel que le sodium, le potassium et le lithium, ou l'équivalent molaire d'un métal alcalino-terreux,
m vaut zéro ou 1 (ce groupe désignant un hydrogène dans le cas où m vaut zéro) et
B est un phénylène, qui peut être substitué par 1 à 4 substituants, qui sont choisis parmi les nombres suivants de substituants: 2 sulfo, 1 carboxy, 4 alkyle ayant de 1 à 4 atomes de carbone et 2 alcoxy ayant de 1 à 4 atomes de carbone, ou représente un naphtylène, qui peut être substitué par 1, 2 ou 3 groupes sulfo, ou être un radical de formule générale -phén-D-phén-, dans laquelle chaque phén représente un radical phénylène identique ou différent, qui est non substitué par 1 ou 2 substituants choisis parmi le groupe constitué d'un sulfo, d'un alkyle ayant de 1 à 4 atomes de carbone et d'un alcoxy ayant de 1 à 4 atomes de carbone, et D est une liaison directe ou un groupe de formule -NH-, -O-, -SO₂, -CO-NH-, -NH-CO-, -SO₂-NH-, -NH-SO₂- ou -SO₂-NH-SO₂-;
R¹ est un hydrogène ou un alkyle ayant de 1 à 4 atomes de carbone;
X est un radical pouvant être éliminé sous l'influence d'un agent à action alcaline;
Z^{o} est un radical de formule générale (3) 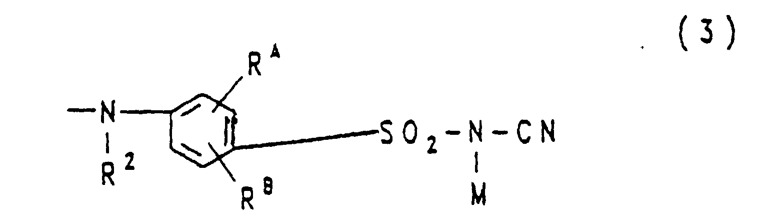
dans laquelle
M est comme défini ci-dessus,
R² est un hydrogène ou un alkyle ayant de 1 à 4 atomes de carbone;
R^{A} est un hydrogène, un alkyle ayant de 1 à 4 atomes de carbone ou un alcoxy ayant de 1 à 4 atomes de carbone, et
R^{B} est un hydrogène, un chlore, un brome ou un alcoxy ayant de 1 à 4 atomes de carbone.

2. Composé anthraquinone selon la revendication 1, de formule générale (1a) 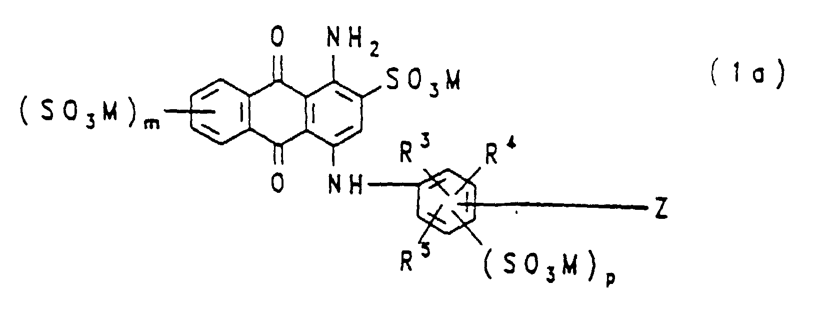 dans laquelle:
M et m sont comme définis à la revendication 1;
R³ est un hydrogène ou un alkyle ayant de 1 à 4 atomes de carbone;
R⁴ est un hydrogène ou un alkyle ayant de 1 à 4 atomes de carbone;
R⁵ est un hydrogène ou un alkyle ayant de 1 à 4 atomes de carbone;
p vaut zéro, 1 ou 2 (ce groupe représentant un hydrogène dans le cas où p vaut zéro);
Z est un radical de formule générale (4) 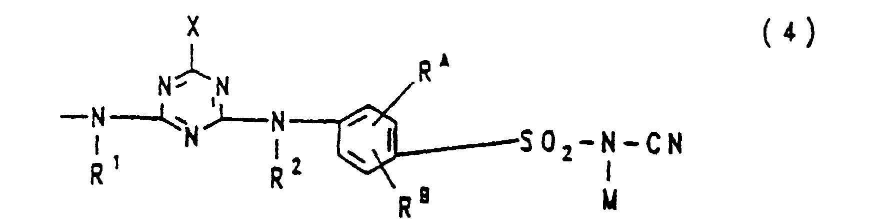 dans laquelle R¹, R², R^{A}, R^{B}, M et X sont comme définis à la revendication 1.

3. Composé anthraquinone selon la revendication 1, de formule générale (5) 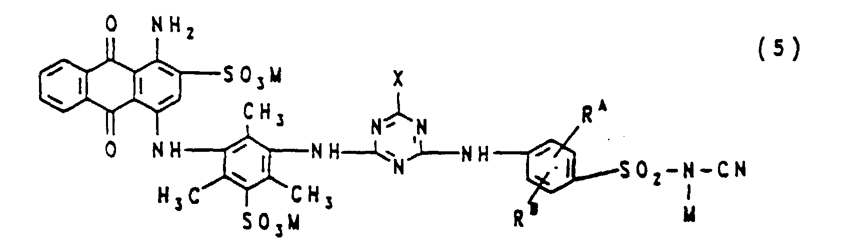 dans laquelle M, R^{A} et R^{B} sont comme définis à la revendication 1 et X désigne un chlore ou un fluor.

4. Composé anthraquinone selon l'une au moins des revendications 1 à 3, caractérisé en ce que X désigne un chlore.

5. Composé anthraquinone selon l'une au moins des revendications 1 à 3, caractérisé en ce que X désigne un fluor.

6. Composé anthraquinone selon la revendication 1, de formule 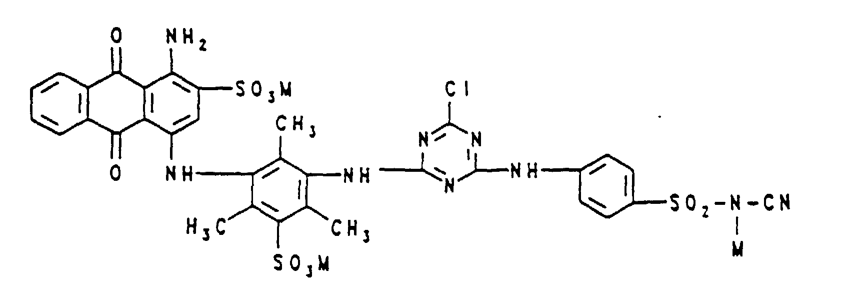 dans laquelle M est comme défini à la revendication 1.

7. Composé anthraquinone selon la revendication 1, de formule 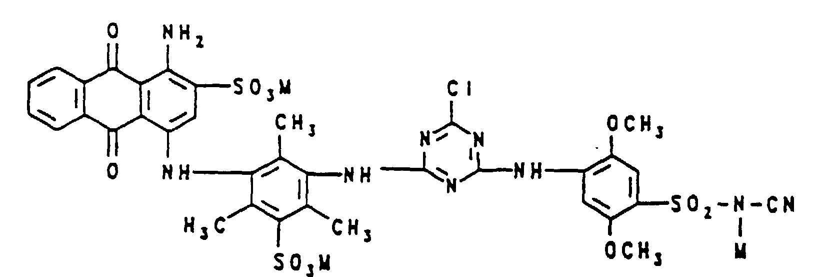 dans laquelle M est comme défini à la revendication 1.

8. Procédé de préparation d'un composé de formule générale (1) mentionnée et définie à la revendication 1, caractérisé en ce que l'on fait réagir dans un ordre quelconque, un composé halogéno-s-triazine de formule générale (6) 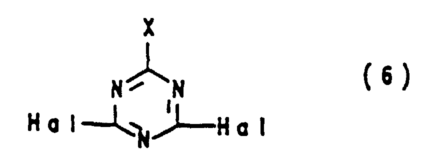 dans laquelle X est comme défini à la revendication 1 et Hal désigne un halogène, avec un composé anthraquinone contenant des groupes amino de formule générale A-NH-R¹, A et R¹ étant comme définis à la revendication 1, et avec un composé amino de formule générale (7) 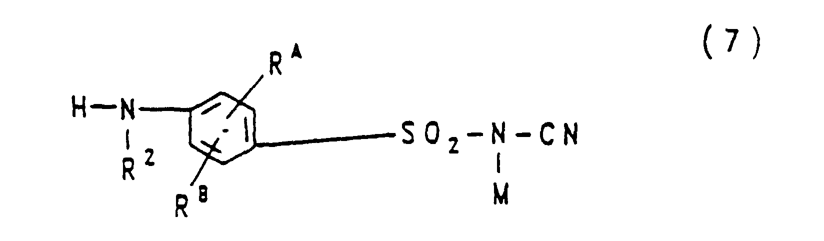 dans laquelle R², R^{A}, R^{B} et M sont comme définis à la revendication 1.

9. Utilisation d'un colorant anthraquinone selon l'une au moins des revendications 1 à 7 ou d'un colorant anthraquinone préparé selon la revendication 8, en vue de la coloration et de l'impression d'un matériau contenant des groupes hydroxy et/ou carbonamide, en particulier d'un matériau fibreux.

10. Procédé de coloration et d'impression d'un matériau contenant des groupes hydroxy et/ou carbonamide, de préférence d'un matériau fibreux, dans lequel on applique un colorant sur le matériau et on fixe le colorant sur le matériau par la chaleur ou à l'aide d'un agent à action alcaline ou par la chaleur et à l'aide d'un agent à action alcaline, caractérisé en ce que l'on utilise, en tant que colorant, un colorant anthraquinone selon l'une au moins des revendications 1 à 7 ou un colorant anthraquinone préparé selon la revendication 8.

11. Composé ou composés parmi le groupe suivant: la 2-méthoxy-5-méthyl-4-cyanamidosulfonylaniline, la 2,5-diméthoxy-4-cyanamidosulfonylaniline, la N-[C₂-C₅-alcanoyl]-2-méthoxy-5-méthyl-4-cyanamidosulfonylaniline, la N- [C₂-C₅) -alcanoyl]-2,5-diméthoxy-4-cyanamidosulfonylaniline.

12. Composé de formule générale 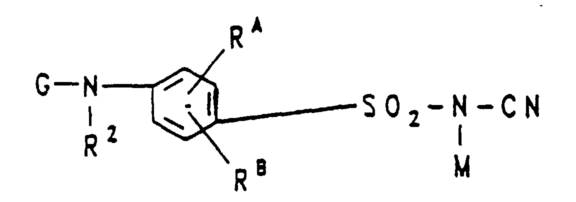 dans laquelle:
R^{A} est un alkyle ayant de 1 à 4 atomes de carbone ou un alcoxy ayant de 1 à 4 atomes de carbone;
R^{B} est un hydrogène, un chlore, un brome ou un alcoxy ayant de 1 à 4 atomes de carbone;
R² est un hydrogène ou un alkyle ayant de 1 à 4 atomes de carbone;
M est un hydrogène ou un métal alcalin ou l'équivalent molaire d'un métal alcalino-terreux et
G est un alcanoyle ayant de 2 à 5 atomes de carbone.
